# EUROPÄISCHE PATENTANMELDUNG

(11) **EP 2 447 007 A1**
(43) Veröffentlichungstag der Anmeldung: **02.05.2012**
(21) Anmeldenummer: 11008591.7
(22) Anmeldetag: 26.10.2011
(51) Int. Cl.: B25B 27/02, B29C 45/27

(54) **Demontagevorrichtung für eine Einspritzdüse**

(30) Priorität: 26.10.2010 DE 102010049394
(71) Anmelder: HASCO Hasenclever GmbH + Co KG, 58513 Lüdenscheid (DE)
(72) Erfinder: Römhild, Stefan, 58509 Lüdenscheid (DE)
(74) Vertreter: Ostriga, Sonnet, Wirths & Roche

(57) **Zusammenfassung**

Die Erfindung betrifft eine Demontagevorrichtung für eine Einspritzdüse zur Führung von Schmelzemasse, insbesondere in einer Kunststoffspritzgießform, mit ersten Befestigungsmitteln (162, 163, 166, 167, 169) zur Befestigung an einem primären Bauteil (13b) der Einspritzdüse (10) und mit zweiten Befestigungsmitteln (157, 158, 161) zur Befestigung an einem sekundären Bauteil (104a) der Einspritzdüse (10), wobei das primäre Bauteil einen ersten Schmelzekanal (94) aufweist und das sekundäre Bauteil einen zweiten Schmelzekanal (95) aufweist, wobei der erste Schmelzekanal und der zweite Schmelzekanal miteinander verbunden sind, wenn das sekundäre Bauteil (104a) an dem primären Bauteil (13b) montiert ist, wobei durch eine Bewegung wenigstens eines Demontageteils (160) der Demontagevorrichtung (157, 160, 163, 167, 168) relativ zu dem primären Bauteil (13b) und / oder relativ zu dem sekundären Bauteil (104a) das primäre Bauteil relativ zu dem sekundären Bauteil bewegbar ist, um den ersten Schmelzekanal von dem zweiten Schmelzekanal zu trennen.

## Beschreibung

Die Erfindung betrifft eine Demontagevorrichtung für eine Einspritzdüse.

Bei Spritzgießmaschinen, insbesondere bei Kunststoffspritzgießmaschinen, ist ein Schmelzekanal häufig in unterschiedlichen Bauteilen ausgebildet. Z.B. ist der Schmelzekanal in einem Düsenkörper einer Einspritzdüse ausgebildet und führt zu wenigstens einer Düsenspitze, welche ein separates Bauteil bildet. Zwischen dem Düsenkörper und der Düsenspitze kann der Schmelzekanal durch weitere Bauteile führen. Wenn die Schmelze in dem Schmelzekanal erkaltet ist die Demontage eines Bauteil oft schwierig, da die in dem Schmelzekanal erkaltete Schmelze eine nur schwer lösbare Verbindung zwischen zwei Bauteilen, z.B. zwischen dem Düsenkörper und einem Haltesektor für eine Düsenspitze, bildet.

Es war Aufgabe der Erfindung die Demontage eines ersten Bauteils von einem zweiten Bauteil zu erleichtern, wobei das erste Bauteil und das zweite Bauteil jeweils Schmelzekanäle ausbilden, die miteinander in Verbindung stehen, wenn das erste Bauteil und das zweite Bauteil aneinander Befestigt sind.

Die Erfindung wird gelöst durch eine Demontagevorrichtung mit den Merkmalen des Anspruchs 1.

Die Demontagevorrichtung ist mit ersten Befestigungsmitteln an einem primären Bauteil der Einspritzdüse und mit zweiten Befestigungsmitteln an einem sekundären Bauteil der Einspritzdüse befestigbar. Ein Demontageteil wirkt mit den ersten Befestigungsmitteln und mit den zweiten Befestigungsmitteln zusammen. Durch eine Bewegung des Demontageteils in eine erste Richtung ist das primäre Bauteil relativ zu dem sekundären Bauteil in Löserichtung bewegbar. Die Löserichtung ist z.B. die erste Richtung. Alternativ ist die Löserichtung z.B. eine zweite Richtung. Die erste Richtung und die zweite Richtung können z.B. eine Drehbewegungsrichtung oder eine translatorische Bewegungsrichtung sein.

Mit der Demontagevorrichtung lassen sich Bauteile der Düse auf einfache Weise demontieren. Es können Hebelkräfte genutzt werden, so dass auch Bauteile demontierbar sind, die z.B. durch erkalteten Kunststoff aneinander gehalten sind.

Eine Ausführungsform ist dadurch gekennzeichnet, dass das Demontageteil an dem primären Bauteil oder an dem sekundären Bauteil translatorisch bewegbar oder drehbewegbar gelagert ist. Z.B. ist ein Zapfen an der Düse befestigbar, an welchem das Demontageteil drehbewegbar gelagert ist. Das Demontageteil ist z.B. von einer Scheibe gebildet.

Eine weitere Ausführungsform ist dadurch gekennzeichnet, dass das Demontageteil eine Kulisse aufweist und dass ein an dem primären Bauteil oder an dem sekundären Bauteil befestigter Kulissenstein in der Kulisse geführt ist. Der Kulissenstein ist z.B. von einem Zapfen gebildet. Z.B. ist das Demontageteil an dem primären Bauteil gelagert. Ein mit dem sekundären Bauteil mittelbar oder unmittelbar verbundener Kulissentein ist z.B. in der Kulisse geführt. Von der Laibung der Kulisse ist der Kulissenstein z.B. bei der Bewegung des Demontageteils in eine bestimmte Richtung bewegbar.

Eine Ausgestaltung der Erfindung ist dadurch gekennzeichnet, dass durch eine Bewegung des Demontageteils das primäre Bauteil oder das sekundäre Bauteil in eine Löserichtung bewegbar ist. Z.B. wird durch die Bewegung des Demontageteils wenigstens ein dem Demontageteil zugeordnetes Befestigungsmittel bewegt, was die Bewegung des primären Bauteils oder des sekundären Bauteils bewirkt.

Eine andere Ausgestaltung der Erfindung ist dadurch gekennzeichnet, dass die Kulisse spiralförmig ausgebildet ist. Z.B. ist das Demontageteil um eine Drehachse drehbar und weist eine spiralförmige Kulisse auf. Ist das erste Bauteil oder das zweite Bauteil von einer Führung derart geführt, dass lediglich eine Bewegung in Löserichtung möglich ist, kann die Kulisse über den Kulissenstein das erste Bauteil oder das zweite Bauteil in Löserichtung bewegen.

Eine weitere Ausführungsform ist dadurch gekennzeichnet, dass der Kulissenstein einer Adaptervorrichtung zugeordnet ist, welche mittels einer Befestigungsvorrichtung mit dem primären Bauteil oder mit dem sekundären Bauteil kraftschlüssig oder formschlüssig verbindbar ist. Die Adaptervorrichtung kann z.B. mit dem Kulissenstein versehen sein.

Gemäß einer weiteren Ausgestaltung der Erfindung umfasst die Befestigungsvorrichtung erste Formschlussmittel, die der Befestigungsvorrichtung zugeordnet sind, die mit zweiten Formschlussmitteln des ersten Bauteils oder des zweiten Bauteils in Eingriff bringbar sind. Die ersten Formschlussmittel sind z.B. von wenigstens einem Zapfen und die zweiten Formschlussmittel sind z.B. von wenigstens einer Aussparung gebildet.

Eine weitere Ausführungsform ist dadurch gekennzeichnet, dass das primäre Bauteil oder das sekundäre Bauteil von Führungsflächen bei einer Bewegung in Löserichtung geführt ist. Auf diese Weise kann sich das primäre Bauteil oder das sekundäre Bauteil in Löserichtung bewegen, auch wenn von dem Demontageteil Kräfte in andere Richtungen auf das Bauteil wirken.

Weitere Vorteile der Erfindung ergeben sich anhand von in den Fig. dargestellten Ausführungsbeispielen. Es zeigen:
Fig. 1, eine perspektivische schematische Darstellung der erfindungsgemäßen Einspritzdüse,
Fig. 2, eine schematische Unteransicht der Einspritzdüse gemäß Fig. 1,
Fig. 3, eine Schnittdarstellung der Einspritzdüse gemäß Schnittlinie III - III in Fig. 2, wobei ein Basiskörper der Einspritzdüse lediglich teilweise dargestellt ist,
Fig. 4, eine Schnittdarstellung der Einspritzdüse gemäß Schnittlinie IV - IV in Fig. 2, wobei der Basiskörper der Einspritzdüse lediglich teilweise dargestellt ist,
Fig. 5, in Anlehnung an Fig. 1 eine perspektivische Darstellung der Einspritzdüse, wobei ein Haltesektor sowie eine Düsenspitze in Explosionsdarstellung gezeigt sind,
Fig. 6, in Anlehnung an Fig. 1 eine perspektivische Darstellung der Einspritzdüse, wobei zwei Haltesektoren sowie ein Spannelement für die Düsenspitze in Explosionsdarstellung gezeigt sind,
Fig. 7, eine schematische Längsschnittdarstellung der in einer Form eingebauten Einspritzdüse,
Fig. 8, eine Ausschnittdarstellung gemäß Ausschnittlinie VIII in Fig. 7,
Fig. 9, eine Ausschnittdarstellung gemäß Ausschnittlinie IX in Fig. 7,
Fig. 10, eine perspektivische schematische Darstellung einer zweiten Ausführungsform der erfindungsgemäßen Einspritzdüse,
Fig. 11, eine schematische Längsschnittdarstellung der Einspritzdüse,
Fig. 12, eine vergrößerte schematische Darstellung des Verteilerkörpers gemäß Fig. 11, wobei der Formeinsatz und der Basiskörper nicht dargestellt sind,
Fig. 13, eine schematische Schnittdarstellung gemäß Ausschnittlinie XIII in Fig. 11,
Fig. 14 eine schematische Unteransicht der Einspritzdüse,
Fig. 15 eine schematische perspektivische Ansicht des Verteilerkörpers, an welchem zwei Haltesektoren montiert sind,
Fig. 16 eine schematische Explosionsdarstellung eines Klemmdeckels mit Schraube,
Fig. 17 eine schematische perspektivische Darstellung eines Haltesektors mit montierter Düsenspitze,
Fig. 18, eine schematische perspektivische Explosionsdarstellung eines Haltesektors, eines Kerns / Torpedos sowie eines Überwurfs,
Fig. 19, eine schematische Seitenansicht des Kerns / Torpedos und des Überwurfs gemäß Fig. 18 in Explosionsdarstellung,
Fig. 20, eine schematische perspektivische Darstellung des Kerns / Torpedos und des Überwurfs gemäß Fig. 19 in Explosionsdarstellung,
Fig. 21, eine schematische perspektivische Explosionsdarstellung eines anderen Ausführungsbeispiels eines Kerns / Torpedos und eines Dichtrings,
Fig. 22, eine schematische perspektivische Darstellung des Kerns / Torpedos und des Dichtrings gemäß Fig. 21 in zusammengebautem Zustand,
Fig. 23, eine schematische perspektivische Darstellung eines anderen Ausführungsbeispiels des Verteilerkörpers sowie der Haltesektoren,
Fig. 24, eine schematische perspektivische Darstellung eines Haltesektors gemäß Fig. 23, und
Fig. 25 eine schematische perspektivische Darstellung eines Klemmdeckels mit Schraube gemäß Fig. 23.
Fig. 26 eine perspektivische schematische Darstellung einer Gabel einer Demontagevorrichtung,
Fig. 27 eine perspektivische schematische Darstellung einer Kulissenscheibe der Demontagevorrichtung,
Fig. 28 eine perspektivische schematische Darstellung eines Aufnahmedorns der Demontagevorrichtung,
Fig. 29 eine schematische Explosionsdarstellung der Demontagevorrichtung sowie des Verteilerkörpers gemäß der zweiten Ausführungsform der Einspritzdüse,
Fig. 30 in Anlehnung an Fig. 29 eine schematische perspektivische Darstellung des Verteilerkörpers mit Demontagevorrichtung,

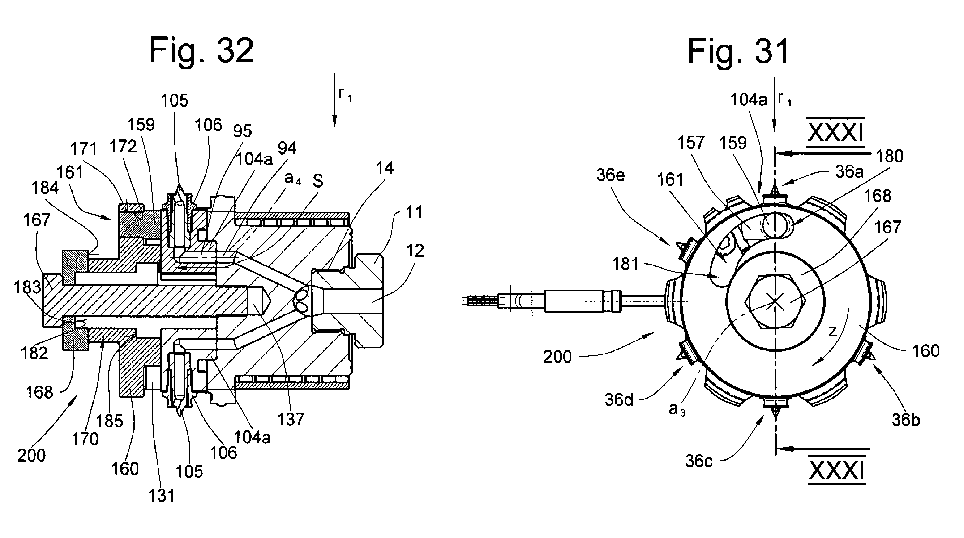

Fig. 31 eine schematische Darstellung des Verteilerkörpers mit Demontagevorrichtung gemäß Ansichtspfeil XXXI in Fig. 30,
Fig. 32 eine schematische Schnittdarstellung gemäß Schnittlinie XXXII - XXXII in Fig. 31.

In den Zeichnungen ist eine Einspritzdüse insgesamt mit der Bezugsziffer 10 bezeichnet. Gleiche Bezugszeichen in den unterschiedlichen Fig. bezeichnen auch bei Hinzufügung oder Weglassen von Zusätzen, wie Kleinbuchstaben oder Ziffern, entsprechende Teile.

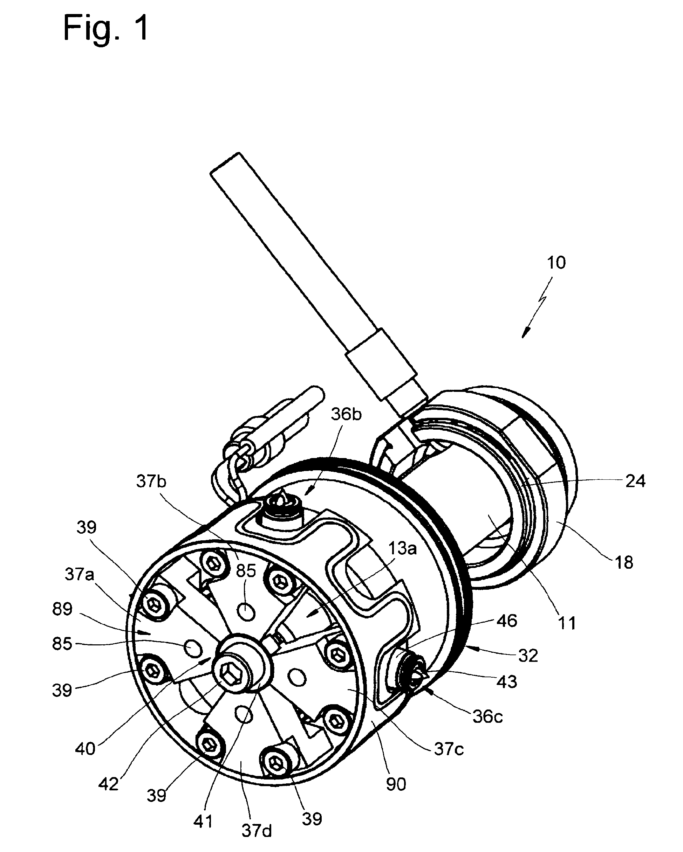

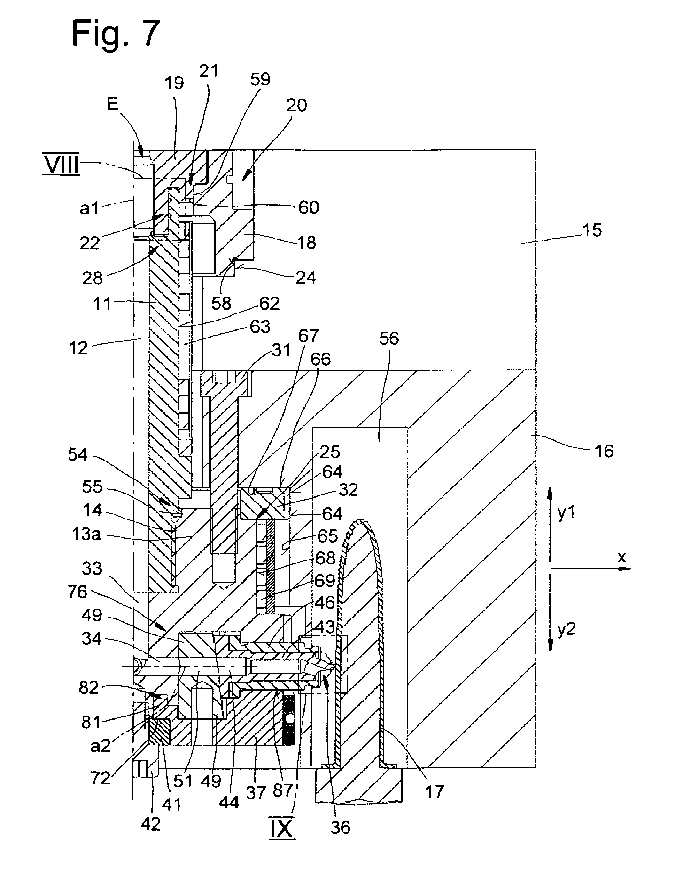

Die Einspritzdüse 10 umfasst z.B. gemäß einem ersten in Fig. 1 dargestellten Ausführungsbeispiel einen Basiskörper 11 sowie einen Verteilerkörper 13a. Der Basiskörper 11 und der Verteilerkörper 13a sind in Aussparungen einer ersten Formplatte 15 sowie einer zweiten Formplatte 16 angeordnet. In der Formplatte 16 sind mehrere Formeinsätze 56 (lediglich in Fig. 7 zu erkennen) im vorliegenden Fall vier Formeinsätze 56, aufgenommen, die jeweils mit einem Formhohlraum 17 versehen sind. In Fig. 1 ist von den vier Formeinsätzen 56 lediglich ein Formeinsatz 56 mit einem Formhohlraum 17 dargestellt.

Mit der Vorrichtung 10 kann die über eine Einlassöffnung E der Vorrichtung 10 zugeführte Schmelze in alle Formhohlräume 17 zugleich eingespritzt werden.

Der Basiskörper 11 ist mittels einer Gewindeverbindung 14 mit dem Verteilerkörper 13a verschraubt. Eine Außenfläche eines Ringsteges 54 des Basiskörpers 11 bildet mit einer Zentrierfläche 55 des Verteilerkörpers 13a eine Zentrierung des Basiskörpers 11.

Ein oberer Endbereich 28 des Basiskörpers 11 ist mittels eines Ringelements 18 sowie eines Deckels 19 zentriert. Das Ringelement 18 ist in einer Aussparung 20 der Formplatte 15 aufgenommen. Das Ringelement 18 umfasst eine Außenfläche 24, welche mit einer Fläche 58 der Formplatte 15 das Ringelement 18 zentrierend zusammenwirkt.

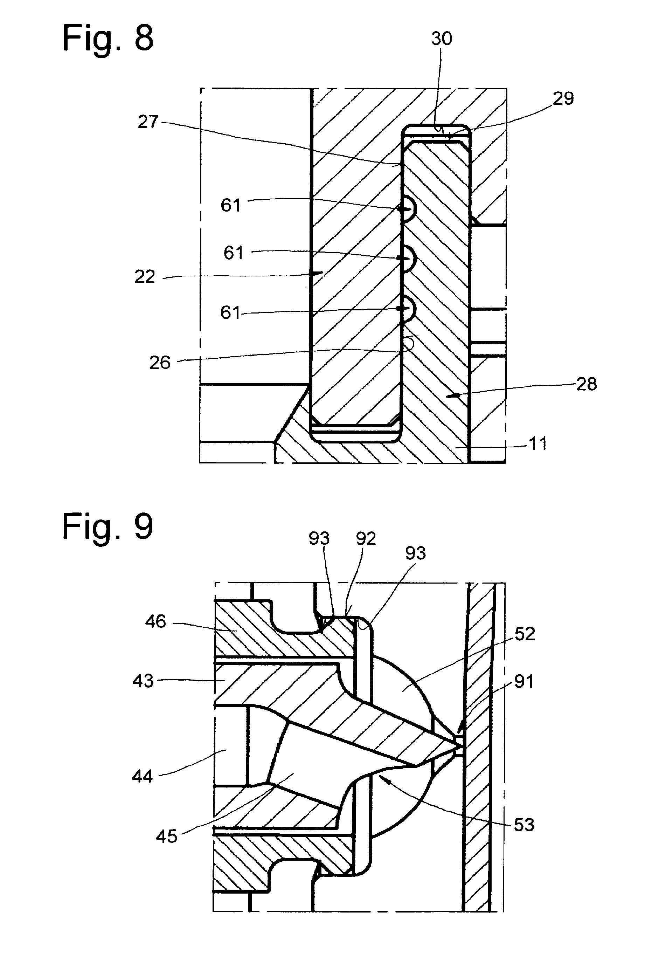

Der Deckel 19 umfasst einen ersten Ringsteg 21 sowie einen zweiten Ringsteg 22. Der Ringsteg 21 des Deckels 19 umfasst eine Außenfläche 59, welche mit einer Außenfläche 60 des Ringelements 18 eine Zentrierung des Deckels 19 bildet. Der Ringsteg 22 des Deckels 19 weist eine Außenfläche 26 auf (siehe Fig. 8), die mit einer Innenfläche 27 des Endbereichs 28 des Basiskörpers 11 zentrierend zusammenwirkt.

Die Außenfläche 26 bildet mit der Innenfläche 27 einen Schiebesitz. Bei einer Längenänderung des Basiskörpers 11 parallel zur Längsmittelachse a1 erfolgt eine Relativbewegung zwischen dem Deckel 19 und dem Basiskörper 11, insbesondere zwischen dem Steg 22 und dem Endbereich 28. Eine Stirnfläche 29 des Endbereichs 28 ist von einer Anschlagfläche 30 des Deckels 19 beabstandet. In jeder Relativposition zwischen dem Steg 22 und dem Endbereich 28 ist der Basiskörper 11 zentriert.

Im Bereich der Innenfläche 27 sind Ringnuten 61 ausgebildet. In den Ringnuten 61 erstarrter Kunststoff bildet eine Dichtung, die verhindert, dass Kunststoff zwischen der Außenfläche 26 und der Innenfläche 27 aus dem Basiskörper 11 heraus gelangen kann. In jeder Relativposition zwischen dem Steg 22 und dem Endbereich 28 ist die Funktion der Dichtung gewährleistet.

Der Vollständigkeit halber sei noch erwähnt, dass an einer Außenfläche 62 des Basiskörpers 11 eine Heizung 63 anliegt, mittels welcher die Temperatur des Basiskörpers 11 konstant gehalten werden kann. Die Heizung 63 wird von einer nicht dargestellten Steuer- und Regelvorrichtung gesteuert.

Der Verteilerkörper 13 ist mit mehreren Schrauben 31, von denen in Fig. 7 lediglich eine Schraube 31 dargestellt ist, an der Formplatte 16 befestigt. Ein Stütz- und Zentrierring 32 ist in einem in dem Verteilerkörper 13a ausgebildeten Lagersitz 25 angeordnet. Außenflächen 64 des Zentrierrings 32 liegen an einer Innenfläche 65 der Formplatte 16 an, stützen den Verteilerkörper 13a radial ab und bilden eine Zentrierung. Eine Außenfläche 66 des Zentrierrings 32 stützt sich an einer Innenfläche 67 der Formplatte 16 ab. An einer Außenfläche 68 des Zentrierrings 32 liegt eine Heizung 69 an, die von der Steuer- und Regelvorrichtung gesteuert wird, um die Temperatur des Verteilerkörpers konstant zu halten. Der Verteilerkörper 13a umfasst ferner eine Heizung 90.

Der Verteilerkörper 13a umfasst einen zentralen Schmelzekanal 33 sowie mehrere, im vorliegenden Fall vier, radial von dem zentralen Schmelzekanal 33 abzweigende Zuführkanäle 34. Der zentrale Schmelzekanal 33 fluchtet mit einem Schmelzekanal 12 des Basiskörpers 11. Der Schmelzekanal 33 erstreckt sich in einen zylindrischen Fortsatz 76 des Verteilerkörpers 13a. In dem Fortsatz verzweigt sich der Schmelzekanal 33 in die vier Zuführkanäle 34, von denen in Fig. 7 lediglich ein Zuführkanal 34 dargestellt ist. Eine Mittelachse a2 jedes Zuführkanals 34 ist etwa rechtwinklig zu der Mittelachse a1 des zentralen Schmelzekanals 12 und des Schmelzekanals 33 ausgebildet.

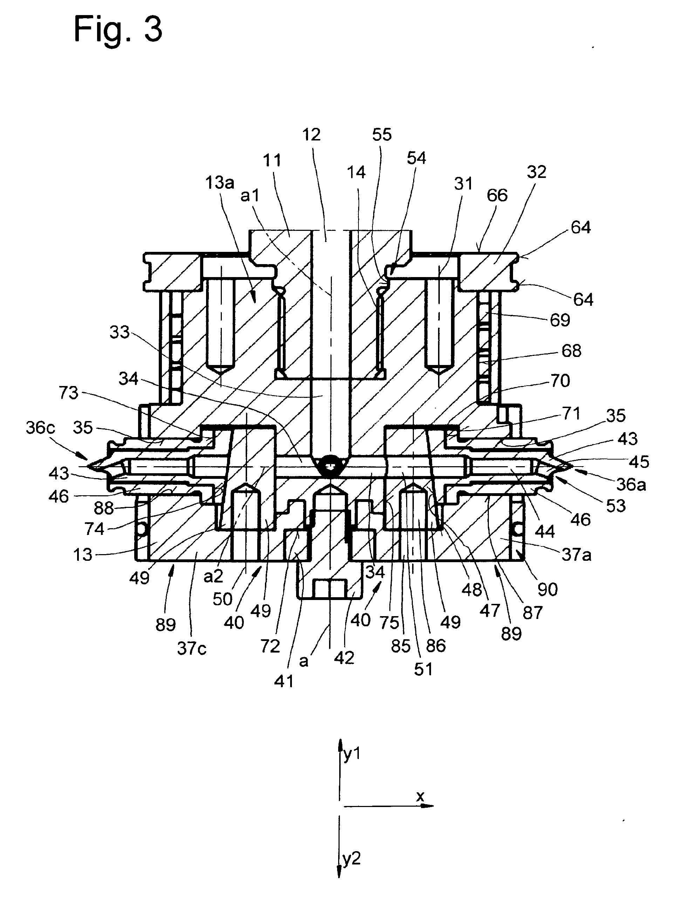

Jeder Zuführkanal 34 leitet die Kunststoffschmelze einer Düsenspitze 36 zu. Der Verteilerkörper 13a umfasst für jede Düsenspitze 36a, 36b. 36c und 36d einen Lagersitz, wobei jeder Lagersitz teilweise von einer Anlagefläche 35 des Verteilerkörpers 13 gebildet ist. An dem Verteilerkörper 13a ist ferner eine Anschlagfläche 70 (z.B. in Fig. 3 zu erkennen) ausgebildet, die ebenfalls einen Teil des Lagersitzes für die Düsenspitze 36 bildet. An der Anschlagfläche 70 liegt eine Ringfläche 71 eines Überwurfs 46 der Düsenspitze 36 an.

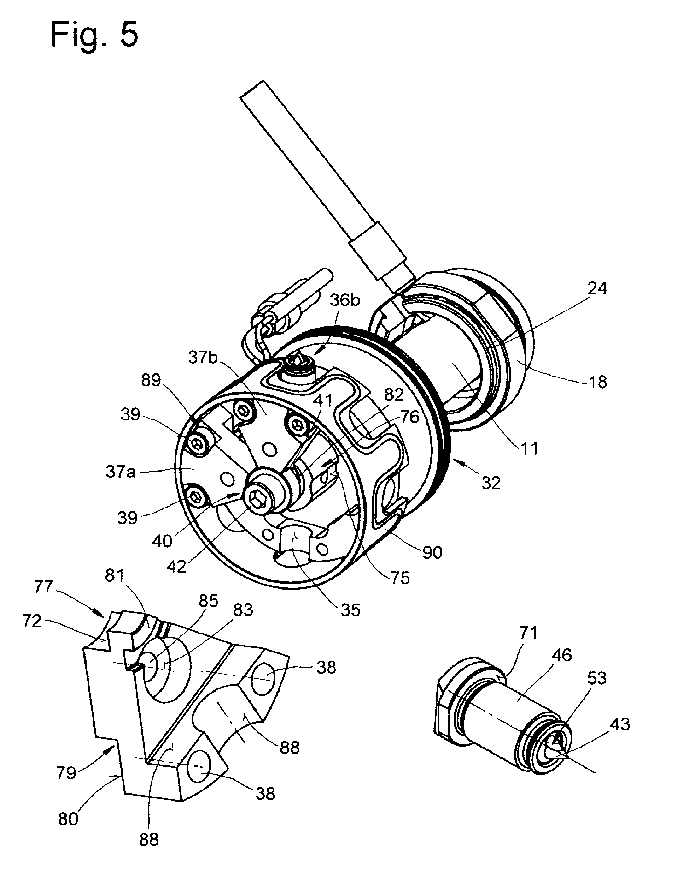

Die Düsenspitze 36 umfasst ferner einen Kern 43, in welchem ein zentraler Schmelzekanal 44 sowie davon radial abzweigende Auslasskanäle 45 ausgebildet sind. Eine Ringfläche 73 des Kerns liegt an einer Ringfläche 74 des Überwurfs 46 an. Der Kern 43 ist mit einer Schrägfläche 47 versehen, die mit einer Schrägfläche 48 eines Spannelements 49 zusammenwirkt. Das Spannelement 49 liegt außerdem an einer Oberfläche 75 des Verteilerkörpers 13a an, die außer in Fig. 3 z.B. in Fig. 5 erkennbar ist.

Die Ringfläche 71 wird in Eingriff mit der Anschlagfläche 70 gehalten durch das Spannelement 49, indem die Schrägfläche 48 des Spannelements 49 eine Kraft in Richtung x auf die Fläche 47 des Kerns 43 ausübt. Der Kern 43 übt eine Kraft in Richtung x auf die Fläche 74 des Überwurfs 46 aus, wodurch die Fläche 71 des Überwurfs 46 an der Anschlagfläche 70 des Verteilerkörpers 13a gehalten ist.

Die Schrägfläche 48 ist zu einer Befestigungsrichtung y geneigt. Das Spannelement 49 kann mittels einer nur schematisch durch eine Symmetrielinie dargestellte Spannschraube 50 in Richtung y1 bewegt werden, bis sie ihren Lagersitz erreicht hat, wobei die Schmelzekanäle 34, 51 und 44 fluchten (Zum Lösen des Spannelements 49 ist das Spannelement 49 mit der Spannschraube 50 auch in die Richtung y2 bewegbar). Die komplementär zu der Schrägfläche 48 geneigte Außenfläche 47 des Kerns 43 der Düsenspitze 36 wirkt mit der Schrägfläche 48 zusammen. Bei der Bewegung des Spannelements 49 in Richtung y kann daher eine Kraft in Richtung x über die Schrägfläche 48 auf die Schrägfläche 47 übertragen werden, wobei die Düsenspitze 36 und der Überwurf 46 in oben dargestellter Weise gegen die Anschlagfläche 70 belastet werden.

Die Befestigung der Düsenspitze 36 in dem Lagersitz erfolgt mittels eines Haltesektors 37, welcher eine Kraft in Richtung y1 ausübt und die Anlagefläche 87 des Überwurfs 46 in Richtung y1 an der Anlagefläche 35 hält. Der Haltesektor 37 weist eine Anlagefläche 88 auf, welcher in Kontakt steht mit einer Anlagefläche 87 des Überwurfs 46. Die Vorrichtung 10 weist für die Düsenspitze 36a einen Haltesektor 37a, für die Düsenspitze 36b einen Haltesektor 37b, für die Düsenspitze 36c einen Haltesektor 37c und für die Düsenspitze 36d einen Haltesektor 37d auf.

In einem Endbereich 89 jedes Haltesektors 37 sind zwei Bohrungen 38 ausgebildet, die von Schrauben 39 durchgriffen sind. Der Schraubenkopf der Schrauben 39 ist in einer Aussparung 79 des Haltesektors 37 angeordnet und liegt an einer Haltefläche 80 des Haltesektors 37 an. Die Schrauben 39 sind in einer Gewindebohrung des Verteilerkörpers 13a verschraubt.

Ein Endbereich 40 des Haltesektors 37 wird mittels einer Halteplatte 41 fest in Richtung y1 an dem Verteilerkörper 13a gehalten, indem die Halteplatte 41 an einer Fläche 72 des Haltesektors 37 anliegt und eine Kraft in Richtung y1 ausübt. Die Fläche 72 ist in einer Aussparung 77 des Haltesektors 37 ausgebildet, in welcher der Kopf einer Schraube 42 aufnehmbar ist. Die Halteplatte 41 ist mittels der Schraube 42 an dem Verteilerkörper 13a befestigt. Ein teilringförmiger Steg 81 des Haltesektors 37 greift in eine Ringnut 82 des Verteilerkörpers 13a. Der Boden 83 einer Bohrung bildet eine Anlagefläche für eine Außenfläche 84 des Spannelements 49. In dem Haltesektor 37 ist eine Bohrung 85 ausgebildet, die von der Spannschraube 50 durchgriffen ist. Die Spannschraube 50 greift in eine Gewindebohrung 86 des Spannelements 49 ein.

Im montierten Zustand gemäß Fig. 1 gelangt die Kunststoffschmelze über den Schmelzekanal 12 des Basiskörpers 11 in den Schmelzekanal 33 des Verteilerkörpers 13a. Der Schmelzekanal 12 fluchtet mit dem Schmelzekanal 33 und ist mit dem Schmelzekanal 33 verbunden. Von dem Schmelzekanal 33 gelangt die Schmelze in die vier Zuführkanäle 34 und fließt anschließend in den in dem Spannelement 49 ausgebildeten Schmelzekanal 51 (abweichend von der Darstellung ist in Fig. 3 das Spannelement 49 ebenfalls mit einem Schmelzekanal 51 versehen).

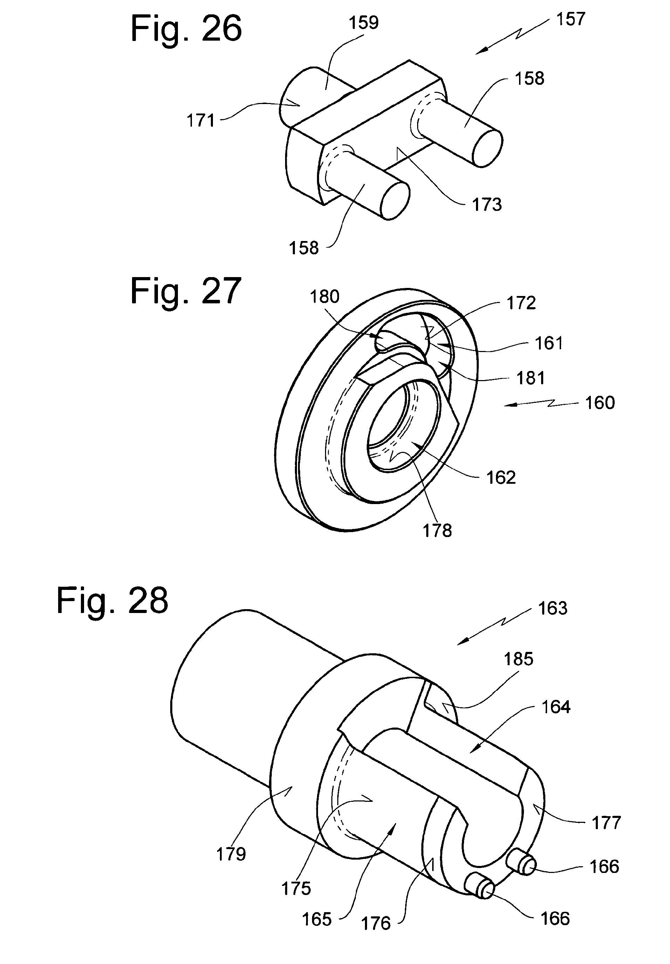

Von dem Schmelzekanal 51 gelangt die Schmelze in den zentralen Schmelzekanal 44 des Kerns 43 der Düsenspitze 36. Über die Auslasskanäle 45 und eine oder mehrere Auslassöffnungen 53 (siehe Fig. 27) der Düsenspitze 36 fließt die Schmelze in einen kalottenartigen Hohlraum 52, welcher in dem Formeinsatz 56 der Formplatte 16 ausgebildet ist. Der Hohlraum 52 ist durch einen Kanal 91 mit dem Formhohlraum 17 verbunden (siehe Fig. 9). Es sei noch erwähnt, dass der Überwurf 46 mit einer Ringfläche 92 versehen ist, die mit einer Fläche 93 des Formeinsatzes 56 dichtend zusammenwirkt.

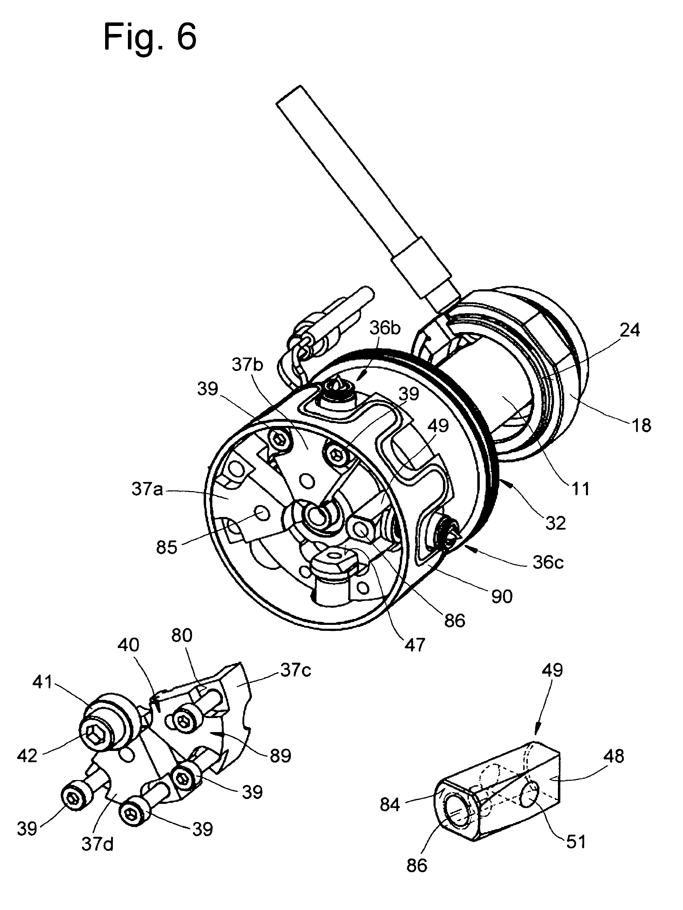

Die Demontage der Düsenspitze 36 erfolgt wie nachfolgend beschrieben. Zunächst wird mittels der Schraube 50 das Spannelement 49 aus seiner Position gelöst. Durch Lösen der zentralen Schraube 42 wird der Endbereich 40 aller Haltesektoren 37a, 37b, 37c und 37d gelöst. Die Haltesektoren 37a, 37b, 37c und 37d werden jedoch von den Schrauben 39 weiterhin fest an dem Verteilerkörper 13a gehalten. Anschließend werden die zwei Schrauben 39 des Haltesektors 37 gelöst, welcher die aus dem Lagersitz zu entfernende Düsenspitze 36 hält (z.B. gemäß Fig. 6 die Haltesektoren 37c und 37d). Die Schrauben 39 der anderen Haltesektoren 37 können befestigt bleiben und die Düsenspitzen 36 fest in ihrem Sitz halten. Die zu lösenden Düsenspitzen 36 können separat aus ihrem Sitz entnommen und z.B. gewartet oder ausgetauscht werden. Anschließend ist eine Befestigung in umgekehrter Reihenfolge möglich.

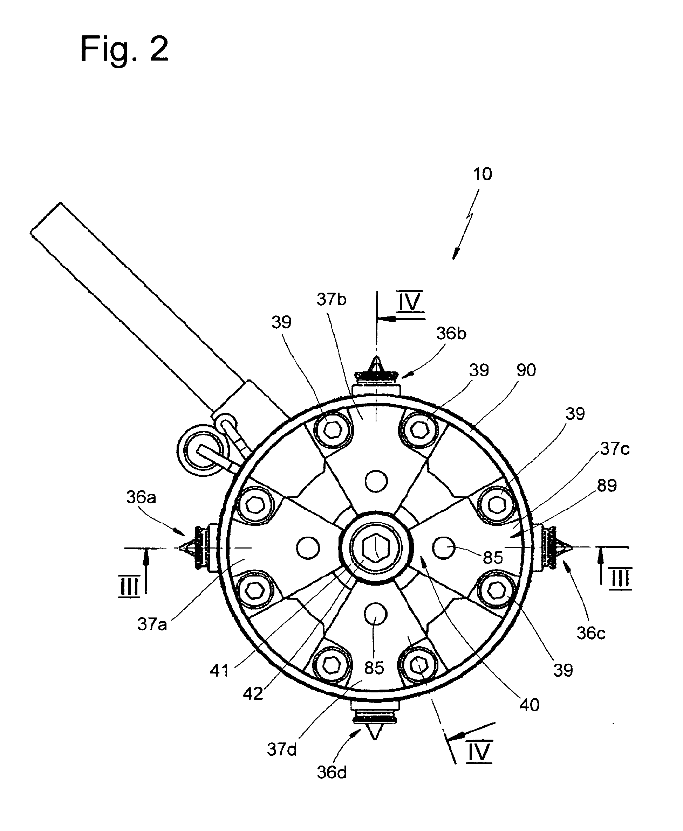

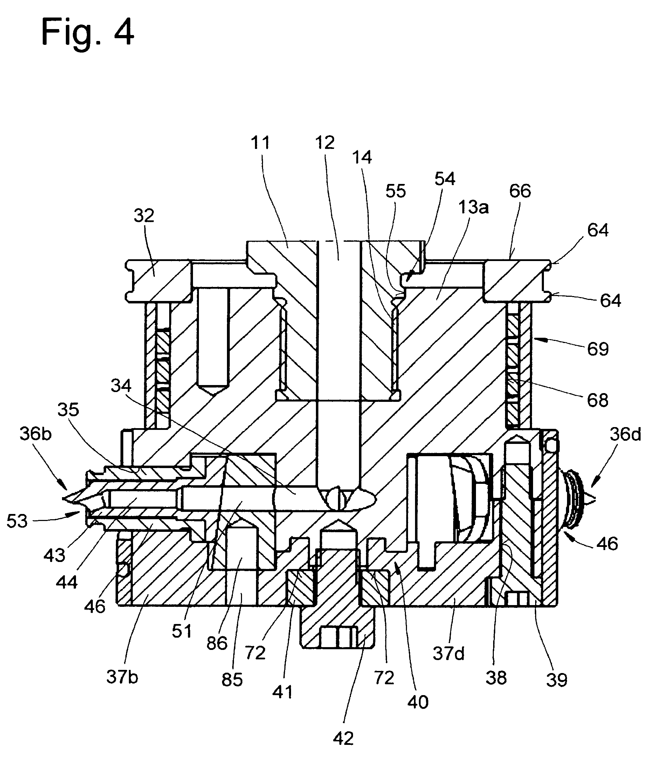

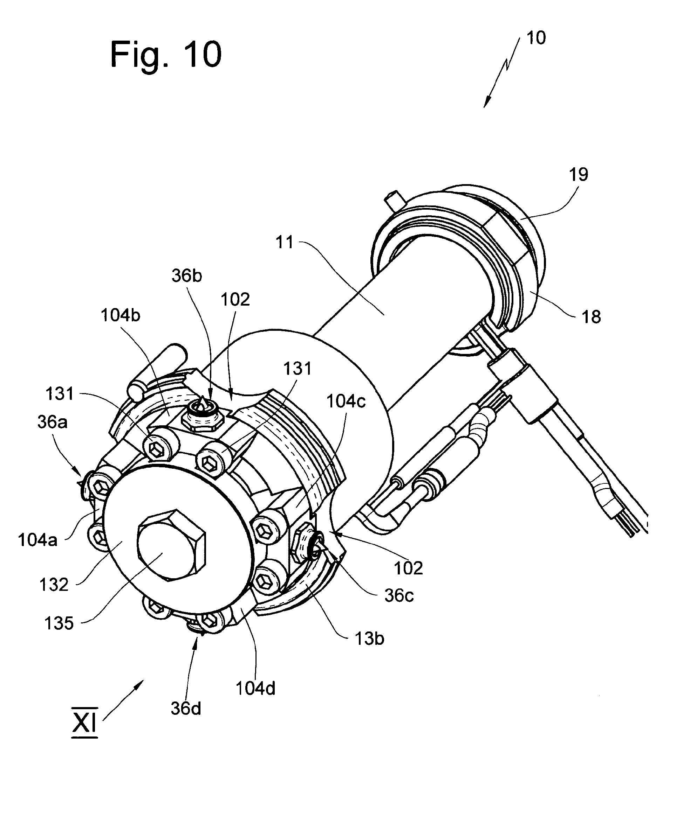

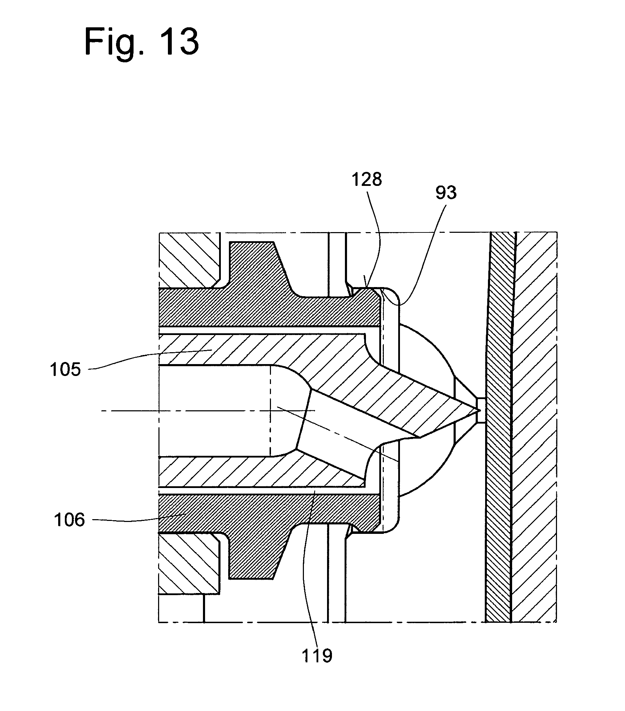

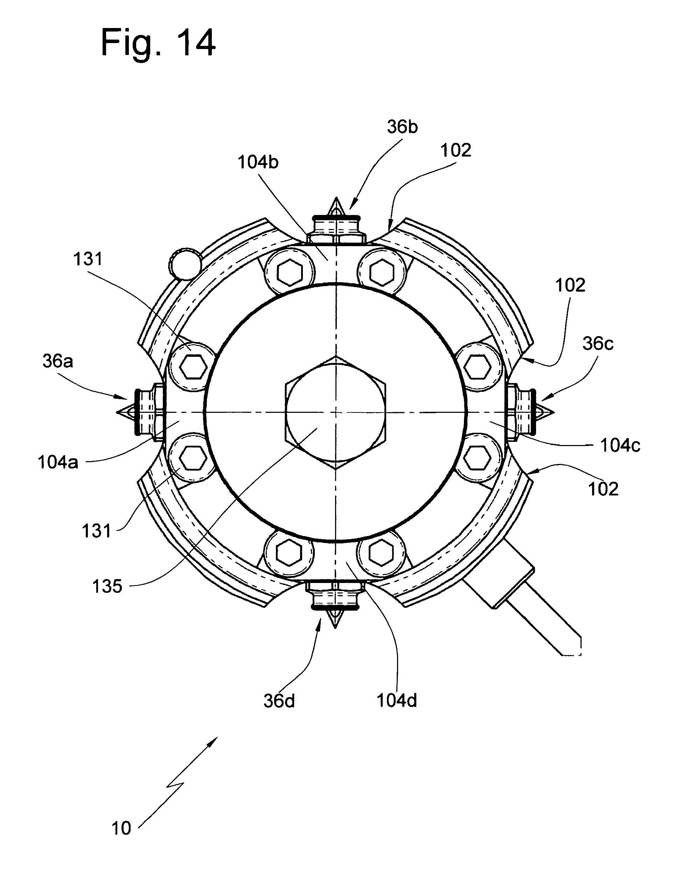

Eine andere Ausführungsform der erfindungsgemäßen Vorrichtung ist in den Fig. 10 bis 22 dargestellt. Der obere Teil der Vorrichtung 10, nämlich der Basiskörper 11 und das Ringelement 18 und der Deckel 19 sind bezüglich des ersten Ausführungsbeispiels gemäß der Fig. 1 bis 9 unverändert ausgebildet. Die Einspritzdüse 10 gemäß dem zweiten Ausführungsbeispiel unterscheidet sich insbesondere bezüglich eines Verteilerkörpers 13b gegenüber dem ersten Ausführungsbeispiel.

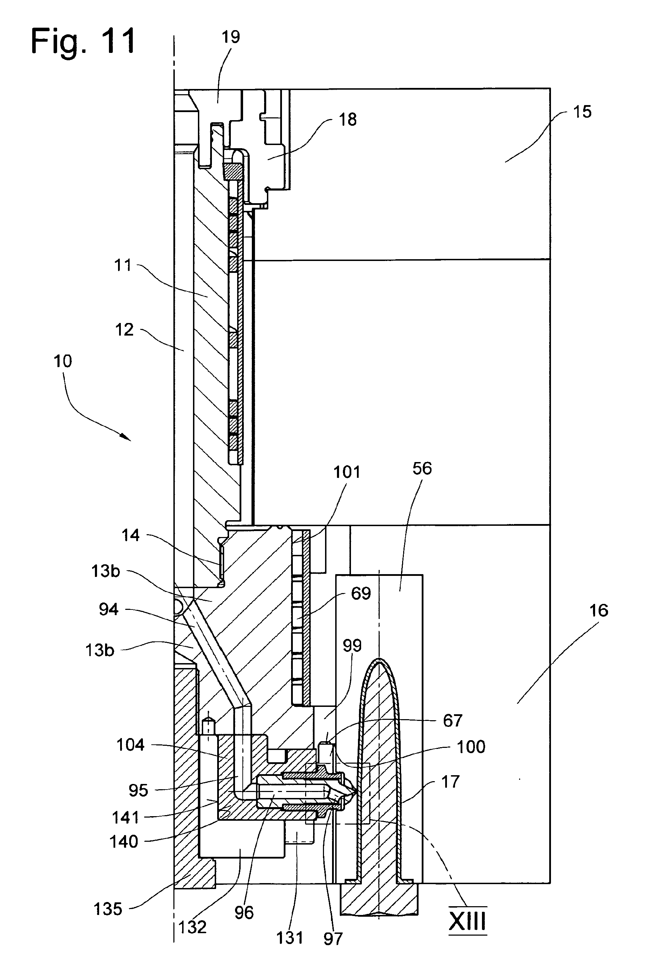

Der Verteilerkörper 13b sitzt gemäß Fig. 11 in der Formplatte 16 und wird mit den Außenflächen 98 zentriert. Die Außenflächen 98 bilden zusammen mit zwischen den Außenflächen 98 angeordneten Freiflächen 157 einen Vielkant, welcher als schmaler Ring ausgebildet ist. Ein Bund 99 des Verteilerkörpers 13b umfasst eine Anlagefläche 100, die an der Innenfläche 67 der Formplatte 16 aufliegt. An einer Außenfläche 101 liegt eine Heizung 69 an, die von der Steuer- und Regelvorrichtung gesteuert wird, um die Temperatur des Verteilerkörpers 13b konstant zuhalten.

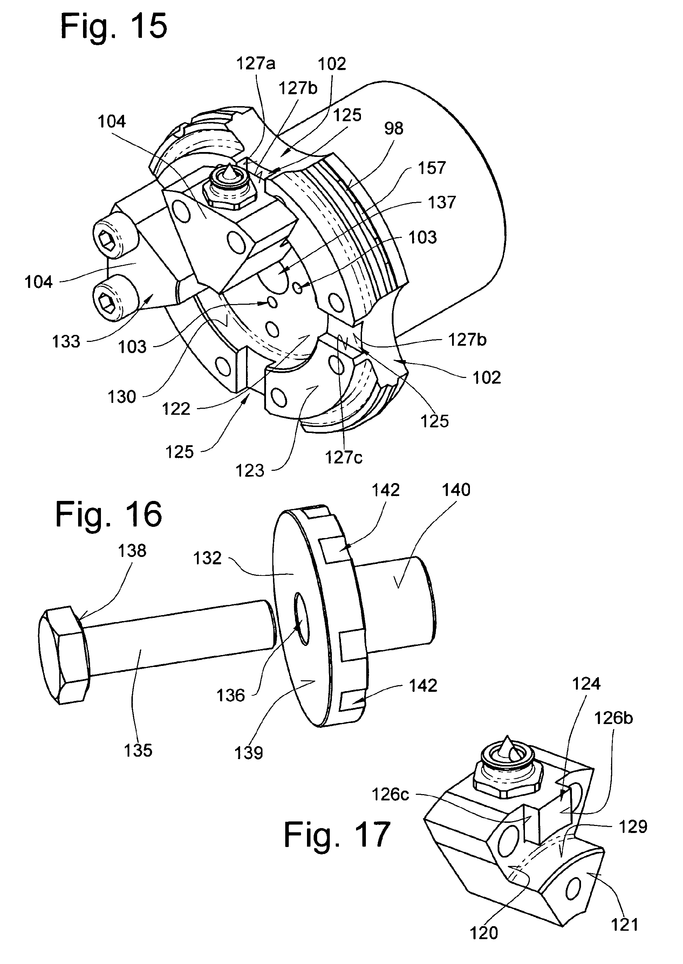

An dem Verteilerkörper 13b sind je nach Anzahl der Formeinsätze 56 Aussparungen 102 ausgebildet (siehe z.B. die Fig. 15), um dem Formeinsatz 56 genügend Platz zu verschaffen.

Eine oder mehrere Zentrierbohrungen 103 sind auf einem Teilkreis angeordnet und dienen zur Positionierung eines Bolzens von einem Demontagewerkzeug, das hier nicht näher beschrieben ist.

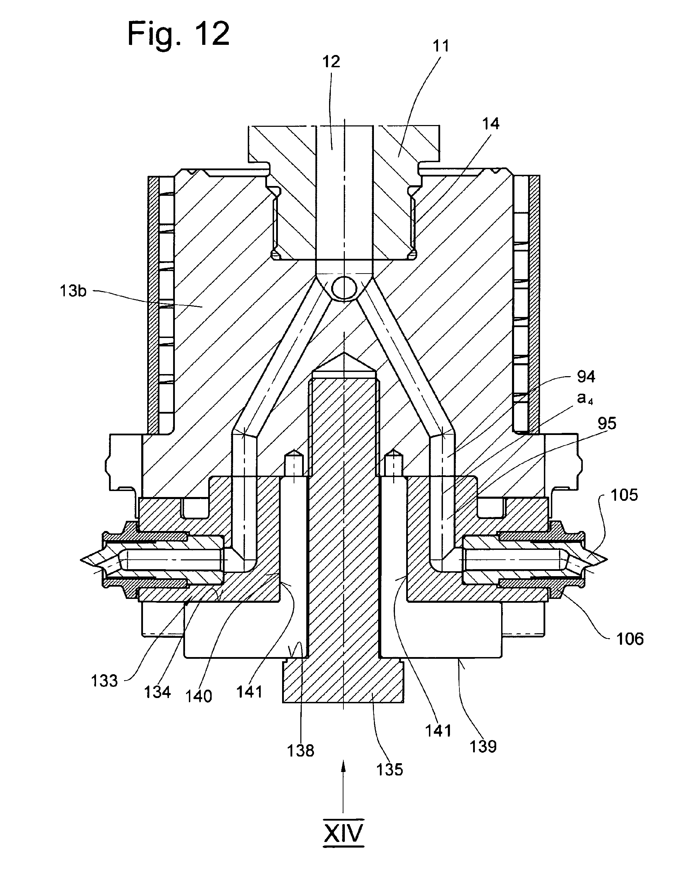

Der Basiskörper 11 ist gemäß Fig. 12 mit dem Verteilerkörper 13b verschraubt. In dem Verteilerkörper 13b teilt sich der zentrale Schmelzekanal 12 in vier Zuführkanäle 94. Gemäß einer alternativen, nicht dargestellten Ausführungsform können aber auch weniger als vier oder mehr als vier Zuführkanäle in dem Verteilerkörper 13b ausgebildet sein. Jeder Zuführkanal 94 mündet in einen Sektorkanal 95 eines Haltesektors 104. Jeder Sektorkanal 95 mündet in einen Schmelzekanal 96 der in einem Kern 105 ausgebildet ist. Der Schmelzekanal 96 teilt sich in mehrere Auslasskanäle 97, durch welche die Kunststoffschmelze in den kalottenförmigen Hohlraum 52 des Formeinsatzes 56 fließen kann.

Jede Düsenspitze 36a, 36b, 36c, 36d umfasst den Kern 105 sowie einen Überwurf 106. Der Kern 105 wird in dem Haltesektor 104 durch den Kontakt einer Ringfläche 107 des Kerns 105 und einer Zentrierfläche 108 des Haltesektors 105 zentriert und liegt mit einer Stirnfläche 109 auf der Kreisringfläche 110 des Haltesektors 104 auf. Damit der Kern 105 mit dem Haltesektor 104 dichtend verbunden ist, wird er mit dem Überwurf 106 geklemmt, so dass zwischen der Stirnfläche 109 und der Kreisringfläche 110 keine Schmelze hindurchfließen kann.

Ein Außengewinde 111 des Überwurfs 106 und ein Innengewinde 112 des Haltesektors 104 bilden eine Gewindeverbindung, um den Überwurf 106 lösbar mit dem Haltesektor 104 zu verbinden und den Kern 105 zwischen dem Überwurf 106 und dem Haltesektor 37 zu verspannen. Mit einer Zentrierfläche 113 wird der Überwurf 106 bezüglich der Innenfläche 114 des Haltesektors 104, zentriert.

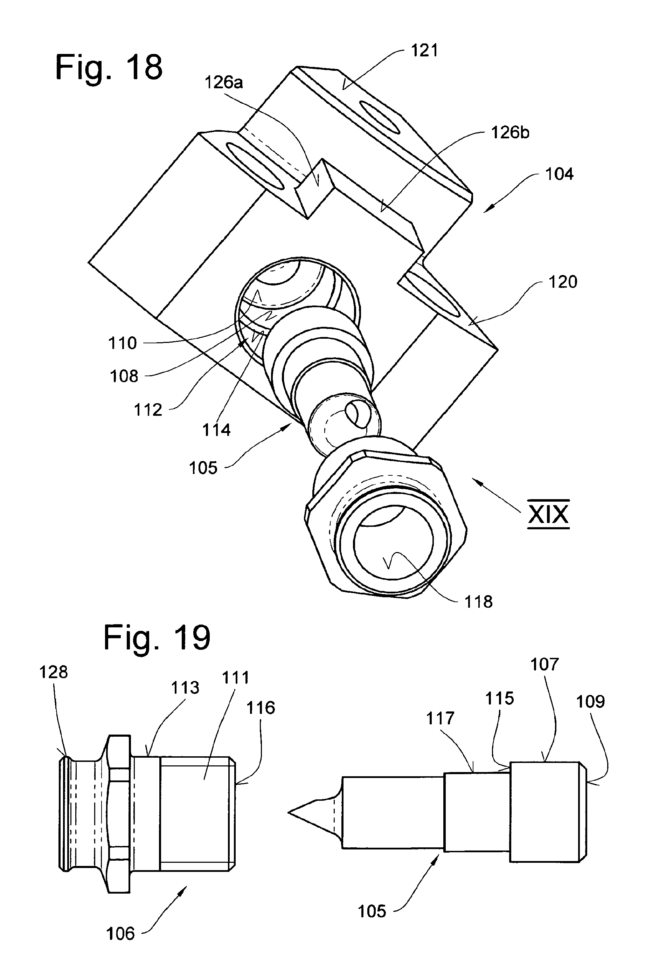

Die Klemmung zwischen dem Kern 105 und dem Überwurf 106 erfolgt, indem die als Kreisringfläche ausgebildete Stirnfläche 116 des Überwurfs 106 (siehe z.B. die Fig. 18 und 19) gegen die Kreisringfläche 115 des Kerns 105 verspannt wird. Die Zentrierung zwischen dem Kern 105 und dem Überwurf 106 erfolgt über eine Außenfläche 117 des Kerns 105 und die Innenfläche 118 des Überwurfs 106.

Der Spalt 119, der zwischen dem Kern 105 und dem Überwurf 106 ausgebildet ist, dient der Isolierung.

Der Haltesektor 104 wird in den Verteilerkörper 13b eingesetzt, so dass die Anlagefläche 121 des Haltesektors 104 auf einem Boden 122 des Verteilerkörpers 13b und eine Anlagefläche 120 des Haltesektors 104 auf einer Anlagefläche 123 des Verteilerkörpers 13b aufliegen. Ein Vorsprung 124 des Haltesektors 104 ist in einer Aussparung 125 des Verteilerkörpers 13b angeordnet. Von dem Vorsprung 124 sind Gleitflächen 126a, 126b, 126c gebildet, die mit Führungsflächen 127a, 127b, 127c eine Führungsvorrichtung bilden.

Durch die Führungsvorrichtung wird verhindert, dass es zwischen der Ringfläche 128 des Überwurfs 106 und der Fläche 93 des Formeinsatzes 56 zu einer Beschädigung kommt, denn bei der Ringfläche 128 handelt es sich um eine Dichtfläche, welche den Überwurf 106 bezüglich dem Formeinsatz 56 abdichtet. Die Abdichtung erfolgt in gleicher Weise wie bei dem ersten Ausführungsbeispiel.

Der Haltesektor 104 wird in Richtung X gegen die Anschlagfläche 130 geschoben. Der Haltesektor 104 befindet sich in einer Endposition in einem Montagesitz, wenn die Anschlagfläche 129 die Gegenfläche 130 kontaktiert. Die Gegenfläche 130 und die Anschlagfläche 129 sind bei dem Ausführungsbeispiel kreisförmig ausgebildet und miteinander konzentrisch, wenn sich der Haltesektor 104 in der Endposition befindet.

Der Haltesektor 104 wird mit dem Verteilerkörper 13b durch 2 Schrauben 131 lösbar verbunden. Die Anlagefläche 121 bildet mit dem Boden 122 eine Abdichtung, wenn der Haltesektor 104 an dem Verteilerkörper 13b montiert ist.

Um jeden Haltesektor 104a, 104b, 104c und 104d durch eine zusätzliche Kraft in Richtung Y1 auch an einem radial inneren Bereich 133 an dem Verteilerkörper 13b zu halten, werden die Haltesektoren 104a, 104b, 104c und 104d durch einen Klemmdeckel 132 geklemmt. Die Anlagefläche 134 des Klemmdeckels 132 liegt auf dem Bereich 133 des Haltesektors 104 auf.

Die Klemmkraft wird durch eine Schraube 135 aufgebracht, welche eine Bohrung 136 des Klemmdeckels 132 durchgreift und in einer

Gewindebohrung 137 des Verteilerkörpers 13b lösbar verschraubbar ist. Der Klemmdeckel 132 wird im montierten Zustand zwischen dem Kopf der Schraube 135 und dem Verteilerkörper 13b verspannt. Eine Ringfläche 138 des Kopfes der Schraube 135 liegt auf einer Außenfläche 139 des Klemmdeckels 132 auf.

Die Zentrierfläche 140 des Klemmdeckels 132 hält die Haltesektoren 104 in der Endposition, indem die Zentrierfläche 140 an einer Außenfläche 141 des Haltesektors 104 anliegt.

An dem Klemmdeckel 132 sind Aussparungen 142 für die Schraubenköpfe der Schrauben 131 ausgebildet.

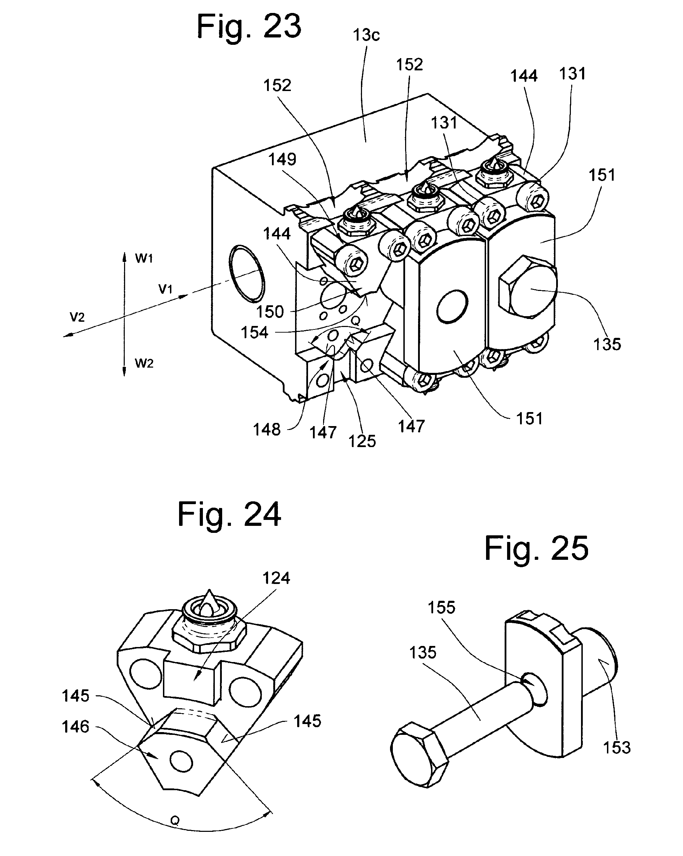

Ein drittes Ausführungsbeispiel (siehe die Fig. 23 bis 25) unterscheidet sich von dem zweiten Ausführungsbeispiel im Wesentlichen dadurch, dass bei der Vorrichtung 10 Haltesektoren 144 linear entlang von zwei zu der Achse V parallelen Achsen an einem Verteilerkörper 13c angeordnet sind. Der Basiskörper 11 ist bei diesem Ausführungsbeispiel wie bei den vorangegangenen Ausführungsbeispielen verschraubt. Anschlagflächen 145 eines Fortsatzes 146 des Haltesektors 144 sind in einem Winkel Q zueinander ausgebildet. Innenflächen 147 eines Sitzes 148 des Verteilerkörpers 13c sind komplementär ausgebildet und stehen ebenfalls in einem Winkel Q zueinander. Die Anschlagflächen 145 dienen der Festlegung einer definierten Position der Haltesektoren 144 bezüglich der Richtungen v1, v2, und w1, w2 in dem Sitz 148.

Auch bei diesem Ausführungsbeispiel ist in gleicher Weise, wie bei dem zweiten Ausführungsbeispiel eine Führungsvorrichtung von einer Aussparung 125 des Verteilerkörpers 13c und einem Vorsprung 124 gebildet.

Die Haltesektoren 144 sind, wie bei dem zweiten Ausführungsbeispiel, an einem äußeren Endbereich 149 mittels Schrauben 131 verschraubt. An einem inneren Endbereich 150 sind jeweils zwei gegenüberliegend angeordnete Haltesektoren 144 mittels eines Klemmdeckels 151 an dem Verteilerkörper 13c befestigt. Jeder Klemmdeckel 151 ist mittels einer Schraube 135 an dem Verteilerkörper 13c gehalten, welche eine Bohrung 155 des Klemmdeckels durchgreift. Der Klemmdeckel 151 umfasst eine zylindrische Zentrierfläche 153, an welcher eine Außenfläche 154 des Haltesektors 144 anliegt.

Wie bei dem zweiten Ausführungsbeispiel ist die Düsenspitze 36 in einer Gewindebohrung des Haltesektors 144 verschraubt.

Für jeden Formeinsatz 56 ist eine Aussparung 152 in dem Verteilerkörper 13c ausgebildet.

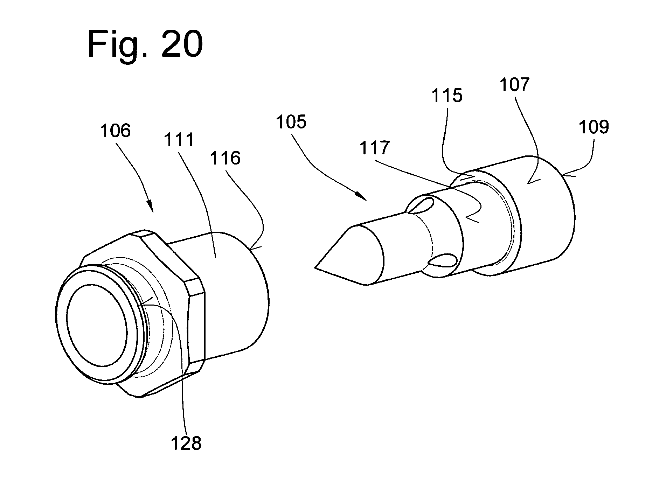

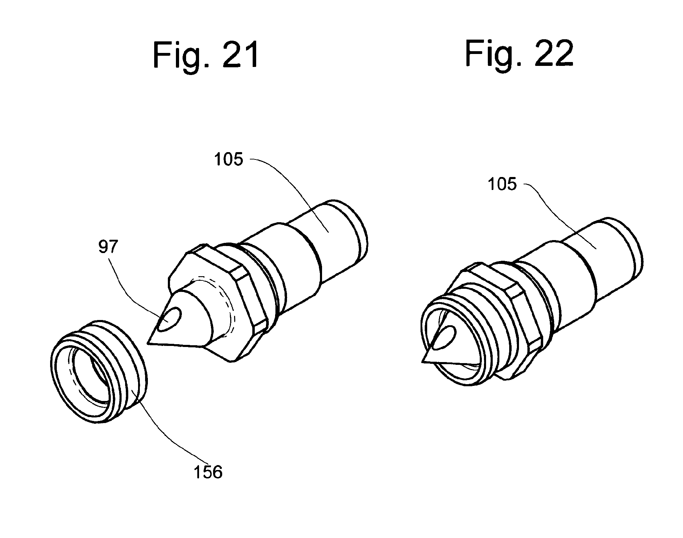

Die Düsenspitze 36 kann in Bezug auf das zweite und dritte dargestellte Ausführungsbeispiel einteilig (siehe die Fig. 21 und 22) oder alternativ auch mehrteilig (siehe z.B. Fig. 20) ausgeführt sein. Bei der einteiligen Düsenspitze 36 ist ein Dichtring 156 z.B. auf dem Kern 105 aufgeschrumpft oder stoffschlüssig durch Kleben, Löten oder Schweißen mit dem Kern 105 verbunden. Der Kern / Torpedo 105 weist ein Gewinde auf und ist an dem Haltesektor 104 bzw. 144 schraubbefestigbar.

Bei der mehrteiligen Düsenspitze 36 weist der Überwurf 106 ein Gewinde auf, so dass der Überwurf 106 in dem Haltesektor 104 bzw. 144 schraubbefestigbar ist. Der Kern / Torpedo 105 wird in diesem Fall zwischen dem Überwurf 106 und dem Haltesektor 104 bzw. 144 geklemmt.

Eine Demontagevorrichtung 200 zur Demontage eines Haltesektors 104a insgesamt ist in den Fig. mit dem Bezugszeichen 200 bezeichnet.

Die Demontagevorrichtung wird in Bezug auf die in dem zweiten Ausführungsbeispiels beschriebene Düse erläutert.

Die Demontagevorrichtung 200 ist zur Demontage eines Haltesektors, z.B. des Haltesektors 104a vorgesehen. Zum Zeitpunkt der Demontage sind der Zuführkanal 94 des Verteilerkörpers 13b und der Sektorkanal 95 des Haltesektors 104a mit Kunststoffmasse gefüllt. Die Kunststoffmasse ist in den Fig. nicht dargestellt. Die Kunststoffmasse befindet sich in einem erkalteten Zustand.

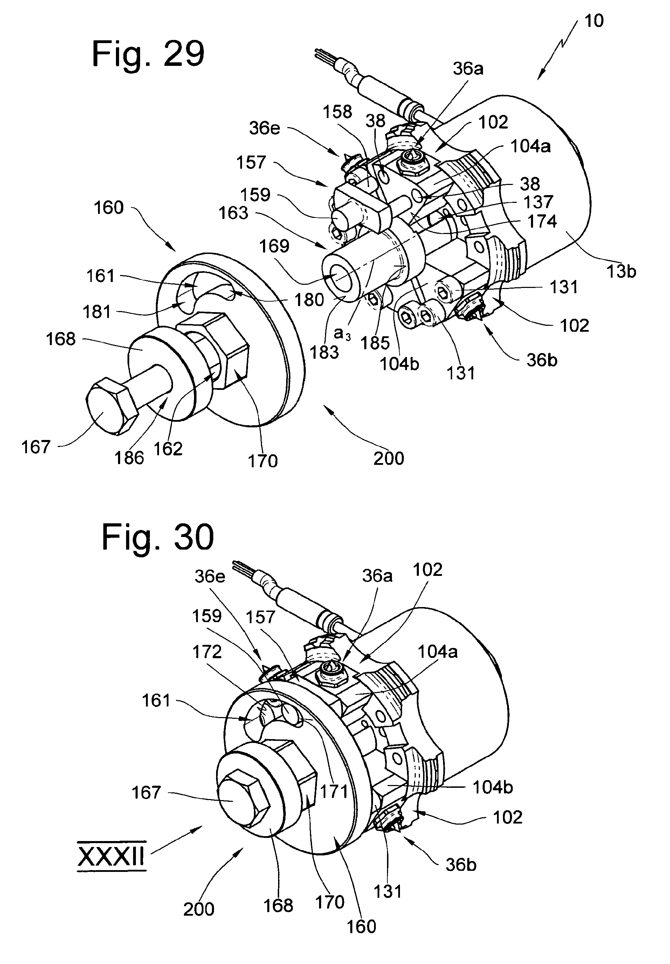

Die Vorgehensweise für die Verwendung der Demontagevorrichtung 200 wird nachfolgend beschrieben. Die Schraube 135 und der Klemmdeckel 132 werden demontiert. Die Schrauben 131 des zu entfernenden Haltesektors 104a werden gelöst und von dem Haltesektor 104a entfernt. In einem nächsten Schritt werden Stifte 158 einer Gabel 157 (siehe die Fig. 26 und 29) in Bohrungen 38 des Haltesektors 104a eingesteckt, bis die Anlagefläche 173 auf einer Außenfläche 174 des Haltesektors 104a aufliegt.

In einem nächsten Schritt wird der Aufnahmedorn 163 eingesetzt. Hierbei wird eine Außenfläche 175 eines Bereichs 165 des Aufnahmedorns 163 in Anlage an die Zentrierfläche 141 des Haltesektors 104a geführt, der demontiert werden soll. Eine Fase 176 erleichtert das Einsetzen des Aufnahmedorns 163. Der Aufnahmedorn 163 befindet sich in einem Montagesitz, wenn die Anlagefläche 177 auf dem Boden 122 aufliegt und Zentrierstifte 166 in Zentrierbohrungen 103 in dem Verteilerkörper 13b eingreifen. Der Aufnahmedorn 163 ist mit einer Aussparung 164 für einen dem Aufnahmedorn 163 zugewandten Bereich des Haltesektors 104a versehen.

In einem weiteren Schritt wird eine Kulissenscheibe 160 auf den Aufnahmedorn 163 aufgesetzt. Die Kulissenscheibe 160 ist in der Montageposition angeordnet, wenn eine Innenfläche 178 einer Bohrung 162 sich auf einer Außenfläche 179 des Aufnahmedorns 163 zentriert.

Eine Kulisse 161 der Kulissenscheibe 160 wird derart positioniert, dass ein Zapfen 159 in einem Bereich 180 der Kulisse 161 angeordnet ist. Der Bereich 180 weist einen radial größeren Abstand von einer Drehachse a3 der Kulissenscheibe 160 auf, als ein Bereich 181 der Kulisse 161.

In einem weiteren Schritt wird eine Scheibe 168 auf den Aufnahmedorn 163 geschoben bis eine Ringfläche 182 der Scheibe 168 an einer Stirnfläche 183 des Aufnahmedorns 163 anliegt.

Anschließend wird eine Schraube 167 durch eine Bohrung 186 Scheibe 168 und eine Bohrung 169 des Aufnahmedorns 163 gesteckt und in die Gewindebohrung 137 des Verteilerkörpers 13b eingeschraubt, so dass die Scheibe 168 zwischen dem Aufnahmedorn 163 und einem Kopf der Schraube 167 geklemmt ist (siehe die Fig. 29 und 30). Die Kulissenscheibe 160 ist zwischen einer Ringfläche 184 der Scheibe 160 und einer Anlagefläche 185 des Aufnahmedorns 163 drehbar gelagert. Die Innenfläche 178 liegt an der Außenfläche 179 des Aufnahmedorns 163 an.

In einem weiteren Schritt wird ein Maulschlüssel auf einen Sechskant 170 aufgesetzt und eine Drehbewegung in Richtung z ausgeführt. Der Sechskant 170 ist fest mit der Kulissenscheibe 160 verbunden. Die Innenfläche 172 der Kulisse 161 der Kulissenscheibe 160 gleitet dabei entlang der Außenfläche 171 des Zapfens 159 der Gabel 157 und übt eine radial in Richtung r1 zu der Drehachse a3 wirkende Kraft auf den Zapfen 159 aus. Der Zapfen 159 ist bei Abschluss der Drehbewegung der Kulissenscheibe 160 in dem Bereich 181 der Kulisse 161 angeordnet.

Da der Vorsprung 124 des Haltesektors 104a in der Aussparung 125 geführt ist, bewegt sich der Haltesektor 104a radial in Richtung r1 zu der Drehachse a3 hin. Die Drehbewegung z der Kulissenscheibe 160 wird in eine Linearbewegung in Richtung r1 umgewandelt. Die Anlagefläche 121 des Haltesektors 104a wird relativ zu dem Boden 122 des Verteilerkörpers 13b verschoben. Hierbei wird die Kunststoffmasse, die sich in dem Zuführkanal 94 und dem Sektorkanal 95 befindet - z.B. etwa rechtwinklig zu einer in dem Zuführkanal 94 und dem Sektorkanal 95 vorgesehenen Strömrichtung S, die parallel zu einer Längsachse a4 der Kanäle 94 und 95 gerichtet ist - durchtrennt.

## Patentansprüche

1. Demontagevorrichtung für eine Einspritzdüse zur Führung von Schmelzemasse, insbesondere in einer Kunststoffspritzgießform, mit ersten Befestigungsmitteln (162, 163, 166, 167, 169) zur Befestigung an einem primären Bauteil (13b) der Einspritzdüse (10) und mit zweiten Befestigungsmitteln (157, 158, 161) zur Befestigung an einem sekundären Bauteil (104a) der Einspritzdüse (10), wobei das primäre Bauteil einen ersten Schmelzekanal (94) aufweist und das sekundäre Bauteil einen zweiten Schmelzekanal (95) aufweist, wobei der erste Schmelzekanal und der zweite Schmelzekanal miteinander verbunden sind, wenn das sekundäre Bauteil (104a) an dem primären Bauteil (13b) montiert ist, wobei durch eine Bewegung wenigstens eines Demontageteils (160) der Demontagevorrichtung (157, 160, 163, 167, 168) relativ zu dem primären Bauteil (13b) und / oder relativ zu dem sekundären Bauteil (104a) das primäre Bauteil relativ zu dem sekundären Bauteil bewegbar ist, um den ersten Schmelzekanal von dem zweiten Schmelzekanal zu trennen.

2. Demontagevorrichtung nach einem der vorangehenden Ansprüche, **dadurch gekennzeichnet, dass** das Demontageteil (160) an dem primären Bauteil (13b) oder an dem sekundären Bauteil translatorisch bewegbar oder drehbewegbar gelagert ist.

3. Demontagevorrichtung nach einem der vorangehenden Ansprüche, **dadurch gekennzeichnet, dass** das Demontageteil (160) eine Kulisse (161) aufweist und dass ein mit dem primären Bauteil oder mit dem sekundären Bauteil (104a) verbundener Kulissenstein (159) in der Kulisse (161) geführt ist.

4. Demontagevorrichtung nach einem der vorangehenden Ansprüche, **dadurch gekennzeichnet, dass** durch eine Bewegung des Demontageteils (160) der Kulissenstein (159) in eine Löserichtung (r1) bewegbar ist.

5. Demontagevorrichtung nach einem der vorangehenden Ansprüche, **dadurch gekennzeichnet, dass** die Kulisse (161) spiralförmig ausgebildet ist.

6. Demontagevorrichtung nach einem der vorangehenden Ansprüche, **dadurch gekennzeichnet, dass** der Kulissenstein (159) einer Adaptervorrichtung (157) zugeordnet ist, welche mittels einer Befestigungsvorrichtung (158) mit dem primären Bauteil oder mit dem sekundären Bauteil (104a) kraftschlüssig oder formschlüssig verbindbar ist.

7. Demontagevorrichtung nach einem der vorangehenden Ansprüche, **dadurch gekennzeichnet, dass** die Befestigungsvorrichtung erste Formschlussmittel umfasst, die der Adaptervorrichtung (157) zugeordnet sind, die mit zweiten Formschlussmitteln des primären Bauteils oder des sekundären Bauteils (104a) in Eingriff bringbar sind.

8. Demontagevorrichtung nach einem der vorangehenden Ansprüche, **dadurch gekennzeichnet, dass** das primäre Bauteil oder das sekundäre Bauteil (104a) bei einer Bewegung von Führungsflächen in Löserichtung (r1) geführt ist.
